# EUROPÄISCHE PATENTSCHRIFT

(11) **EP 1 592 985 B1**
(45) Veröffentlichungstag und Bekanntmachung des Hinweises auf die Patenterteilung: **16.04.2008**
(21) Anmeldenummer: 04710402.1
(22) Anmeldetag: 12.02.2004
(51) Int. Cl.: G01S 17/02

(54) **VORRICHTUNG EINES KRAFTFAHRZEUGES ZUR RÄUMLICHEN ERFASSUNG EINER SZENE INNERHALB UND/ODER AUSSERHALB DES KRAFTFAHRZEUGES**
DEVICE FOR A MOTOR VEHICLE USED FOR THE THREE-DIMENSIONAL DETECTION OF A SCENE INSIDE OR OUTSIDE SAID MOTOR VEHICLE
DISPOSITIF AUTOMOBILE DE DETECTION TRIDIMENSIONNELLE D'UNE SCENE A L'INTERIEUR ET/OU A L'EXTERIEUR DE L'AUTOMOBILE

(30) Priorität: 13.02.2003 DE 10305861
(43) Veröffentlichungstag der Anmeldung: 09.11.2005
(73) Patentinhaber: ADAM OPEL AG, 65423 Rüsselsheim (DE); IEE INTERNATIONAL ELECTRONICS & ENGINEERING S.A., 6468 Echternach (LU)
(72) Erfinder: BALZER, Dirk, D-64572 Büttelborn (DE); BECKER, Guido, 66679 Losheim am See (DE)
(74) Vertreter: Beissel, Jean
(86) Internationale Anmeldenummer: PCT/EP2004/050124
(87) Internationale Veröffentlichungsnummer: WO 2004/072677

(56) Entgegenhaltungen:
- EP-A- 0 717 288
- DE-A- 2 649 274
- US-A- 5 283 622
- US-A1- 2002 057 195

## Beschreibung

Die Erfindung bezieht sich auf eine Vorrichtung eines Kraftfahrzeuges zur räumlichen Erfassung der Szene innerhalb und/oder außerhalb des Kraftfahrzeuges mit einem mit einer elektronischen Detektionseinrichtung gekoppelten LIDAR-Sensor und einem mit einer Bildverarbeitungseinrichtung verbundenen Bildsensor zur Aufnahme und Auswertung von Bildern der Szene.

Die DE 199 28 915 A1 offenbart ein Verfahren, mit dem die Sichtweite im Blickfeld eines Kraftfahrzeuges exakt bestimmbar ist, so dass der Fahrer mit Hilfe der Sichtweiteninformation zu einer angepassten Fahrweise veranlasst werden kann. Hierbei misst ein monokularer Videosensor den Kontrast eines von einem Radar- oder LIDAR-Sensor erfassten Objekts, und aus den vom Radar- oder LIDAR-Sensor und vom monokularen Videosensor gelieferten Messwerten wird die Sichtweite bestimmt. Alternativ dazu wird die Entfernung des mindestens einen Objekts und dessen Kontrast mittels eines binokularen Videosensors gemessen und anschließend wird aus den Kontrast- und Entfernungsmesswerten die Sichtweite bestimmt. Außer der Kontrastmessung erfolgt keine weitere Auswertung der vom Videosensor aufgenommenen Bilddaten.

Des Weiteren erweist es sich als nachteilig, dass die für größere Messbereiche geeigneten LIDAR-Sensoren mit steigender Entfernung zu einem Objekt die Ortsauflösung verlieren, womit eine Verschlechterung der Objekterkennung einhergeht.

Eine Vorrichtung nach dem Oberbegriff des Patentanspruchs 1 ist in US 2002/057195 offenbart .

Der Erfindung liegt die Aufgabe zugrunde, eine Vorrichtung der eingangs genannten Art zu schaffen, die die vorteilhaften Eigenschaften der beiden Sensoren zur Kompensierung von deren nachteiligen Eigenschaften miteinander verbindet.

Erfindungsgemäß wird die Aufgabe dadurch gelöst, dass der Bildsensor als 3-D-Kamera zur Aufnahme von dreidimensionalen Biddaten ausgebildet ist. Mittels des LIDAR-Sensors und seiner zugeordneten Detektionseinrichtung lassen sich auf bekannte Weise Abstandsdaten zwischen dem Kraftfahrzeug und einem Objekt innerhalb der Szene bestimmen und zusätzlich wird ein Bild der Szene erzeugt, das eine Einschätzung der Daten des LIDAR-Sensors erlaubt. Der Rechner ordnet Bildpunkten des Objektes neben Grauwert- bzw. Farbinformationen auch kartesische Koordinaten zu, so dass ein bildgebendes dreidimensionales Messverfahren vorliegt. Durch die über den Rechner gekoppelte Verwendung des LIDAR-Sensors und des Bildsensors im und am Kraftfahrzeug ist die eindeutige Detektion und Klassifikation von Objekten in der Szene, insbesondere von anderen Kraftfahrzeugen, gewährleistet.

Bevorzugt kombiniert der Rechner zur Auswertung von Objektdaten im Fembereich zum Kraftfahrzeug die Daten der Detektionseinrichtung des LIDAR-Sensors mit zweidimensionalen Bilddaten der Bildverarbeitungseinrichtung. Der Rechner benötigt zur Auswertung der zweidimensionalen Bilddaten lediglich eine relativ geringe Rechenleistung und kompensiert die Problematik der sich mit steigender Entfernung des Objektes vom Kraftfahrzeug abnehmenden Genauigkeit bei der Objekterkennung des LIDAR-Sensors durch die auch im Fembereich zuverlässige Objekterkennung der Bildverarbeitungseinrichtung, die entsprechende Bilddaten von dem Bildsensor empfängt.

Vorzugsweise übernimmt der Rechner als Objektdaten im Nahbereich zum Kraftfahrzeug von dem als 3D-Kamera ausgebildeten Bildsensor aufgenommene und von der Bildverarbeitungseinrichtung ausgewertete dreidimensionale Bilddaten. Somit ist im Nahbereich von Objekten zum Kraftfahrzeug keine Kombination der Entfernungsdaten des LIDAR-Sensors mit den durch die Bildverarbeitungseinrichtung gewonnenen Bilddaten erforderlich. Sämtliche notwendige Daten lassen sich aus den von der 3D-Kamera aufgenommenen Bildern ermitteln und stehen ohne zusätzliche Rechnerleistung direkt zur Verfügung.

Zweckmäßigerweise übermittelt der Rechner die Daten der Szene über ein Fahrzeugnetzwerk an Sicherheits- und/oder Assistenzsysteme des Kraftfahrzeuges. Solche Sicherheits- und/oder Assistenzsysteme benötigen die Daten der Szene im Kraftfahrzeug bzw. in der Umgebung des Kraftfahrzeuges zur Einschätzung eines Gefahrenpotentials und einer damit zusammenhängenden Aktivierung von Sicherheitseinrichtungen, die beispielsweise ein gezieltes Aufblasen eines Airbags oder die Beaufschlagung von Gurtstraffern bewirken. Des Weiteren liefern Assistenzsysteme des Kraftfahrzeuges beispielsweise beim Einparken in eine Parklücke optische bzw. akustische Hilfestellung für den Fahrer.

Nach einer vorteilhaften Ausgestaltung der Erfindung arbeitet die 3D-Kamera nach dem "Time-Of-Flight" (TOF)-Verfahren. Eine solche nicht scannende bildgebende 3D-Kamera arbeitet auf einem Array von sogenannten Demodulationspixeln. Jedes dieser Demodulationspixel ermöglicht sowohl die Messung der Hintergrundintensität als auch die individuelle Ankunftszeit einer hochfrequenzmodulierten Szenenbeleuchtung. Das Funktionsprinzip der Demodulationspixel basiert auf dem CCD-Prinzip (Charge Coupled Device), das den Transport, die Speicherung und die Akkumulation optisch generierter Ladungsträger in definierten örtlich begrenzten Gebieten auf dem Bildsensor erlaubt. Aus jedem Demodulationspixel lassen sich Entfernungs- und Reflektivitätsinformationen der zu vermessenden Szene aus einem empfangenen optischen Signal extrahieren. Das "Time-Of-Flight"-Verfahren kann nach dem Impuls- oder Phasenmessverfahren durchgeführt werden.

Bevorzugt weist ein Laser des LIDAR-Sensors eine Optik für einen Nah- und einen Fembereich auf. Zweckmäßigerweise ist die Optik für den Nah- und den Fembereich durch eine Doppeloptik oder zwei getrennt anzusteuernde Linsen realisiert. Hierdurch lässt sich eine Fokussierung des Lasers erzielen, die dessen Winkelauflösung erhöht und die Detektion von Objekten in der Szene verbessert.

Nach einer vorteilhaften Weiterbildung des Erfindungsgedankens arbeitet der Laser des LIDAR-Sensors mit einer Strahlung im Infrarot-Bereich und dient als Lichtquelle für den Bildsensor. Die ausgesendete Strahlung lässt sich beispielsweise mittels eines Signalgenerators modulieren, so dass sie zur Beleuchtung der mit einer 3D-Kamera aufgenommenen Szene verwendet werden kann. Durch die Ausgestaltung des Lasers als Lichtquelle kann die Anordnung einer separaten Lichtquelle für den Bildsensor entfallen.

Es versteht sich, dass die vorstehend genannten und nachstehend noch zu erläutemden Merkmale nicht nur in der jeweils angegebenen Kombination, sondern auch in anderen Kombinationen verwendbar sind. Der Rahmen der vorliegenden Erfindung ist nur durch die Ansprüche definiert.

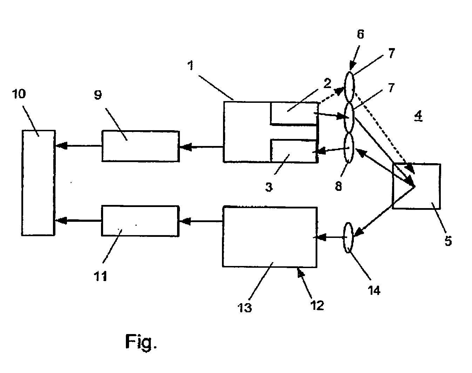

Die Erfindung wird im Folgenden anhand eines Ausführungsbeispieles unter Bezugnahme auf die zugehörige Zeichnung näher erläutert. Die einzige Figur zeigt eine schematische Darstellung der erfindungsgemäßen Vorrichtung als Blockschaltbild.

Die innerhalb eines Kraftfahrzeuges angeordnete Vorrichtung umfasst einen LIDAR-Sensor 1, der im Wesentlichen aus einem im Infrarot-Bereich abstrahlenden Laser 2 und einer Empfangseinrichtung 3 für die reflektierte Strahlung zusammengesetzt ist. Zur Fokussierung einer mit dem Laser 2 abzutastenden Szene 4 mit mindestens einem Objekt 5 ist dem Laser 2 eine Optik 6 für den Nah- und den Fembereich zugeordnet, die zwei getrennt anzusteuernde Linsen 7 umfasst, wobei die eine der Linsen 7 eine Streuung der Strahlung im Nahbereich und die andere Linse 7 eine Fokussierung der Strahlung im Fernbereich bewirkt. Zum Empfang der von dem Objekt 5, von Nebel bzw. sonstigen Partikeln in der Szene 4 reflektierten Strahlung ist der Empfangseinrichtung 3 eine optische Einrichtung 8 zugeordnet. Der LIDAR-Sensor 1 ist mit einer elektronischen Detektionseinrichtung 9 gekoppelt, die die Entfernung zwischen dem Kraftfahrzeug und dem Objekt 5 aufgrund der Zeitdifferenz zwischen der Aussendung der Strahlung des Lasers 2 und dem Empfang der rückgestreuten Strahlung berechnet. Die Detektionseinrichtung 9 steht mit einem Rechner 10 in Verbindung, an den sie die berechneten Entfernungsdaten der Szene 4 liefert.

Zur Ermittlung räumlicher Daten der Szene 4 steht der Rechner 10 mit einer Bildverarbeitungseinrichtung 11 in Verbindung, die wiederum an einen Bildsensor 12 angeschlossen ist. Der als 3D-Kamera 13 ausgeführte Bildsensor 12 nimmt mit seinem Objektiv 14 Bilder der Szene 4 auf, die die Bildverarbeitungseinrichtung 11 bezüglich Grauwert- bzw. Farbinformationen nach vorkommenden Objekten 5 auswertet und die erfassten Objekte 5 klassifiziert. Darüber hinaus ist nach dem "Time Of Flight"-Verfahren auch die Zuordnung von Entfernungsdaten möglich. Hierbei sendet der Laser 2 des LIDAR-Sensors 1 eine modulierte Strahlung im Infrarot-Bereich aus und dient somit als Lichtquelle für den Bildsensor 12 zur Beleuchtung der Szene 4.

Der Rechner 10 ermittelt die räumlichen Daten der Szene 4 anhand vorliegender Entfernungsdaten und Bilddaten. Hierbei verwendet er bei detektierten Objekten 5 im Nahbereich zum Kraftfahrzeug die dreidimensionalen Daten der Bildverarbeitungseinrichtung 11 und kombiniert bei Objekten 5 im Fernbereich zum Kraftfahrzeug die Entfernungsdaten der Detektionseinrichtung 9 mit den Bilddaten der Bildverarbeitungseinrichtung 11. Zusätzlich berücksichtigt der Rechner die mittels des LIDAR-Sensors 1 ermittelten Sichtweiteninformationen, die beispielsweise Rückschlüsse auf Nebel- bzw. Verschmutzungspartikel in der Szene 4 schließen lassen. Der Rechner 10 stellt die räumlichen Daten der Szene 4 über ein nicht dargestelltes Fahrzeug-Netzwerk Sicherheits- bzw. Assistenzsystemen des Kraftfahrzeuges zur weiteren Verwendung zur Verfügung.

### Bezugszeichenliste

- 1.: LIDAR-Sensor
- 2.: Laser
- 3.: Empfangseinrichtung
- 4.: Szene
- 5.: Objekt
- 6.: Optik
- 7.: Linse
- 8.: optischeEinrichtung
- 9:: Detektionseinrichtung
- 10.: Rechner
- 11.: Bildverarbeitungseinrichtung
- 12.: Bildsensor
- 13.: 3D-Kamera
- 14.: Objektiv

## Patentansprüche

1. Vorrichtung eines Kraftfahrzeuges zur räumlichen Erfassung einer Szene (4) innerhalb und/oder außerhalb des Kraftfahrzeuges mit einem mit einer elektronischen Detektionseinrichtung (9) gekoppelten LIDAR-Sensor (1) und einem mit einer Bildverarbeitungseinrichtung (11) verbundenen Bildsensor (12) zur Aufnahme und Auswertung von Bildern der Szene (4), wobei die Detektionseinrichtung (9) und die Bildverarbeitungseinrichtung (11) mit einem Rechner (10) zur Ermittlung räumlicher Daten der Szene (4) gekoppelt sind, **dadurch gekennzeichnet, dass** der Bildsensor (12) als 3D-Kamera zur Aufnahme von dreidimensionalen Bilddaten ausgebildet ist.

2. Vorrichtung nach Anspruch 1, **dadurch gekennzeichnet, dass** der Rechner (10) zur Auswertung von Objektdaten im Fernbereich zum Kraftfahrzeug die Daten der Detektionseinrichtung (9) des LIDAR-Sensors (1) mit zweidimensionalen Bilddaten der Bildverarbeitungseinrichtung (11) kombiniert.

3. Vorrichtung nach Anspruch 1 oder 2, **dadurch gekennzeichnet, dass** der Rechner als Objektdaten im Nahbereich zum Kraftfahrzeug von dem als 3D-Kamera (13) ausgebildeten Bildsensor (12) aufgenommene und von der Bildverarbeitungseinrichtung (11) ausgewertete dreidimensionale Bilddaten übernimmt.

4. Vorrichtung nach einem der Ansprüche 1 bis 3, **dadurch gekennzeichnet, dass** der Rechner (10) die Daten der Szene (4) über ein Fahrzeug-Netzwerk an Sicherheits- und/oder Assistenzsysteme des Kraftfahrzeuges übermittelt.

5. Vorrichtung nach einem der Ansprüche 1 bis 4, **dadurch gekennzeichnet, dass** die 3D-Kamera nach dem "Time-of-Flight" (TOF)-Verfahren arbeitet.

6. Vorrichtung nach einem der Ansprüche 1 bis 5, **dadurch gekennzeichnet, dass** ein Laser (2) des LIDAR-Sensors (1) eine Optik (6) für einen Nah- und einen Fernbereich aufweist.

7. Vorrichtung nach Anspruch 6, **dadurch gekennzeichnet, dass** die Optik (6) für den Nah- und den Fernbereich durch eine Doppeloptik oder zwei getrennt anzusteuernde Linsen (7) realisiert ist.

8. Vorrichtung nach einem der Ansprüche 1 bis 7, **dadurch gekennzeichnet, dass** der Laser (2) des LIDAR-Sensors (1) mit einer Strahlung im Infrarot-Bereich arbeitet und als Lichtquelle für den Bildsensor (12) dient.

## Claims

1. Device for a motor vehicle for the three-dimensional detection of a scene (4) inside or outside the motor vehicle with a LIDAR sensor (1) coupled to an electronic detection device (9) and an image sensor (12) connected to an image processing device (11) for the acquisition and analysis of images of the scene (4), the detection device (9) and the image processing device (11) being coupled to a computer (10) for the determination of spatial data concerning the scene (4), **characterized in that** the image sensor (12) takes the form of a 3D camera for the acquisition of three-dimensional image data

2. Device according to Claim 1, **characterized in that** the computer (10) for analysis of object data in the zone distant from the motor vehicle combines the data from the detection device (9) of the LIDAR sensor (1) with two-dimensional image data from the image processing device (11).

3. Device according to Claim 1 or 2, **characterized in that** the computer receives, as object data in the zone near the motor vehicle, three-dimensional image data acquired by the image sensor (12) in the form of a 3D camera (13) and analysed by the image processing device (11).

4. Device according to any one of Claims 1 to 3, **characterized in that** the computer (10) transmits the data relating to the scene (4) via a motor vehicle network to safety and/or assistance systems of the motor vehicle

5. Device according to any one of Claims 1 to 4, **characterized in that** the 3D camera operates according to the "Time-of-Flight" (TOF) procedure

6. Device according to any one of Claims 1 to 5, **characterized in that** a laser (2) of the LIDAR sensor (1) displays optics (6) for a nearby zone and for a distant zone.

7. Device according to Claim 6, **characterized in that** the optics (6) for the nearby zone and for the distant zone are constructed in the form of a double objective or two lenses (7) that can be controlled separately.

8. Device according to any one of Claims 1 to 7, **characterized in that** the laser (2) of the LIDAR sensor (1) operates with radiation in the infrared band and serves as a light source for the image sensor (12)

## Revendications

1. Dispositif d'un véhicule pour l'enregistrement dans l'espace d'une scène (4) à l'intérieur et/ou à l'extérieur du véhicule comprenant un capteur LIDAR (1) couplé avec un système de détection (9) électronique et un capteur d'image (12) relié à un dispositif de traitement d'image (11) pour l'enregistrement et l'analyse d'image de la scène (4), le système de détection (9) et le système de traitement d'image (11) étant couplés avec un ordinateur (10) pour la détermination de données dans l'espace de la scène (4), **caractérisé en ce que** le capteur d'image (12) est conçu comme un appareil de prise de vues en 3D pour l'enregistrement de données d'image en trois dimensions.

2. Dispositif selon la revendication 1, **caractérisé en ce que** l'ordinateur (10) combine pour l'analyse de données d'objet dans la zone éloignée du véhicule les données du système de détection (9) du capteur LIDAR (1) avec des données d'image en deux dimensions du système de traitement d'image (11).

3. Dispositif selon la revendication 1 ou 2, **caractérisé en ce que** l'ordinateur prend en charge des données d'image en trois dimensions enregistrées sous forme de données d'objet dans la zone rapprochée du véhicule par le capteur d'image (12) conçu comme appareil de prise de vues en 3D (13) et analysées par le système de traitement d'image (11).

4. Dispositif selon l'une quelconque des revendications 1 à 3, **caractérisé en ce que** l'ordinateur (10) transmet les données de la scène (4) par un réseau de véhicule à des systèmes de sécurité et/ou d'assistance du véhicule.

5. Dispositif selon l'une quelconque des revendications 1 à 4, **caractérisé en ce que** l'appareil de prise de vues en 3D travaille selon le procédé "Time-of-Flight" (TOF).

6. Dispositif selon l'une quelconque des revendications 1 à 5, **caractérisé en ce qu'**un laser (2) du capteur LIDAR (1) présente une optique (6) pour une zone approchée et une zone éloignée

7. Dispositif selon la revendication 6, **caractérisé en ce que** l'optique (6) pour la zone rapprochée et la zone éloignée est réalisée par une double optique ou deux lentilles (7) à activer séparément

8. Dispositif selon l'une quelconque des revendications 1 à 7, **caractérisé en ce que** le laser (2) du capteur LIDAR (1) travaille avec un rayonnement dans la zone infrarouge et sert de source lumineuse pour le capteur d'image (12)
